# EUROPEAN PATENT APPLICATION

(11) **EP 1 509 000 A1**
(43) Date of publication of application: **23.02.2005**
(21) Application number: 03018874.2
(22) Date of filing: 19.08.2003
(51) Int. Cl.: H04L 12/28, H04L 12/46

(54) **RF Coverage Extension for Wireless Home Networking Systems**

(71) Applicant: Sony International (Europe) GmbH, 10785 Berlin (DE)
(72) Inventor: Stadelmeier, Lothar, Stuttgart Technology Center, Hedelfinger Strasse 61, 70327 Stuttgart (DE); Dawidowsky, Frank, c/o Stuttgart Technology Center, Hedelfinger Strasse 61, 70327 Stuttgart (DE)
(74) Representative: Rupp, Christian, Dipl.Phys.

(57) **Abstract**

The RF coverage area of a heterogeneous home networking system (100a) installed within a building which is constituted by a number of wired (102d) and/or wireless local area networks (102a,b,c,e) connected to a wired backbone (106) that comprises a number of wired-to-backbone bridges (109) and wireless-to-wired bridges (112a-e) to the backbone (106) is extended. A method comprises the steps of allocating (S0a) a number of wired and/or wireless transmission channels and bridging (S0b) between home network media elements of different multimedia data types on allocated transmission channels at a predefined layer of the underlying protocol stack. Using (S1) a common media access control (MAC) layer for the entire home networking system (100a) for accessing (S2) different backbone media (106) thereby allows simple integration (S2') of different types of home network media elements interconnected by said home networking system (100a). This media access control (MAC) layer is controlled by a central backbone controller (µC) and appears to the outside world as one overall controlling instance. In contrast to the state of the art, the invention uses different physical (PHY) layers on the backbone media and the wireless local area networks (102a,b,c,e) for mapping (S4) the PHY-layer representation of an RF signal transmitted via an allocated RF transmission channel of a wireless local area network (102a,b,c,e) connected to the home networking system to an IF signal on a backbone medium of the wired Ethernet LAN (106), combines home network media elements of different multimedia data types on the RF/PHY layer and thus enables an extension of the RF coverage area without the need of new frequency resources or loss of bandwidth. Each wireless-to-backbone bridge (112a,b,c,e) thereby comprises a PHY-layer conversion stage (304) for mapping the PHY-layer representation of an RF signal transmitted via an allocated RF transmission channel of a wireless local area network (102a,b,c,e) to a signal on a backbone medium (106).

The controlling instance of the backbone (104) and the wired backbone (106) can be a powerline communication system which is specially adapted to use the IF spectrum of an RF signal received via an allocated RF transmission channel of a wireless local area network (102a,b,c,e) on the mains.

## Description

### FIELD AND BACKGROUND OF THE INVENTION

The present invention generally relates to the field of wireless LANs. It particularly refers to a method for operating a heterogeneous home networking system which is constituted by a number of wired and/or wireless LANs connected to a backbone infrastructure (e.g. powerline). F.e. ethernet and/or wireless cluster can thus be connected via the backbone media.

Traditional wireless home-networking technology is typically deployed in the scope of line-of-sight, infrared, unidirectional, hand-held controller applications, e.g. for remotely controlling video cassette recorders, television sets, home security or alarm systems. Another obvious wireless technology applies to cordless phone systems. However, neither of these systems can definitively be classified as a robust home network element.

The broadest definition of home networking is any technology or service that makes it possible to connect home appliances to each other or automate them. A more specific definition includes linking computers, peripherals and consumer electronic devices used within a user's home to form a connected environment. Home networking has also been described as a collection of elements that process, manage, transport, and store information, enabling the connection and integration of multiple computing, control, monitoring, and communication devices within the user's home.

### BRIEF DESCRIPTION OF THE PRESENT STATE OF THE ART

There are two primary methods for establishing a home network: wired and wireless. Wireless technologies e.g. include Wi-Fi (IEEE 802.11b, 802.11a and 802.11g), HiperLAN2 and HomeRF (IEEE 802.11). As most homeowners would favor no new cables versus installing new cables, wireless home networking tends to be the most preferred technology.

However, it is also the most expensive technology and can be unreliable at times. On the other hand, wired home networking technologies, which, inter alia, include Ethernet, HomePNA (on telephone lines) and HomePlug (powerline communication system), tend to be favored in newly constructed homes since they are generally more reliable and require less expensive components. Many recent periodicals argue HomePNA to be the ideal home networking technology, yet closer examination of each technology's features, components, costs, security, suppliers, advantages and disadvantages indicates this may not be the case, especially with the expansion of broadband technology and the increasing number of multi-computer homes. To understand the proposed idea of the present invention, it is necessary to briefly describe the main features, advantages and drawbacks of commonly used wired and wireless home networking technologies according to the state of the art.

Ethernet, which is based on the IEEE 802.3 and IEEE 802.5 networking standards, operates at 10 Mbps to 100 Mbps within a range of 150 meters. They can be as simple as two computers with network interface cards interconnected with a cable or as complex as multiple routers, bridges and hubs connecting many diverse network appliances. A 1-Mbps network is suitable for sharing Internet connections and some printing. However, it is not preferred for large file transfers, multi-player gaming or multimedia applications. As demand for voice and data transmission increases, the amount of bandwidth required to convey these signals also increases.

An Ethernet network deploys CAT5 cabling to carry signals between interconnected network components. Data transmission is based on the CSMA/CD protocol, which allows for network devices to automatically sense the activity on the network line, transmit when the path is clear and resend a data packet if a collision with another packet is detected. There are components available which assist with routing data on the network. Network components are typically connected to a hub or switch that controls traffic on the network by passing along the signal. If a user wants to connect all devices on the network without regards to security or access, then he/she can use a peer-to-peer architecture with a hub.

Since an Ethernet home network runs on special cabling and connectors, it is the most secure of all home network technologies. A router can be added between the high-speed modem and the network to "hide" it from the outside Internet. Many home network routers incorporate firewalls that can be configured for added security. Since the network is self-contained, a person would have to physically connect to it in order to get any information.

HomePlug Powerline Alliance (HomePlug) involves running a network over conventional home electrical wiring and works by plugging a gateway adapter into a regular wall outlet. The adapter thereby encrypts the data before transmitting it over the powerlines by using a standard 56-bit DES encryption. A HomePlug network transfers data at a transmission speed between 8 and 14 Mbps and is compatible with other wireless and HomePNA networks. It has the longest range of any home networking technology, which can reach up to 750 meters. Typically, HomePlug networks are able to connect up to 256 devices within a 450 m² home.

Wireless home network technologies which are in use today include Wi-Fi (IEEE 802.11b, 802.11a and 802.11g), HiperLAN2, HomeRF, IrDA, and Bluetooth. These technologies are ideal for dedicated purposes such as device communication and control. However, IrDA requires line of sight, and Bluetooth has a limit range of 10 meters or closer, which makes these technologies unfavorable for a home network infrastructure. Consequently, the following section is only focused on Wi-Fi and HomeRF wireless technologies.

Wi-Fi, which stands for "wireless fidelity", is the ideal technology for a user who wishes not to install new wires in his/her home. It uses the 2.4-GHz frequency band, the same frequency used by cell and cordless phones, employs a frequency-shift key (FSK) technology known as Direct-Sequence Spread Spectrum (DSSS) and has a range of 75-120 meters in closed areas and 300 meters in open areas. Depending on the respectively underlying IEEE standard, wireless transmission speeds can vary between 2 Mbps (IEEE 802.11) and 54 Mbps (IEEE 802.11a).

HomeRF was the first practical wireless home networking technology and came out in the mid of 2000. HomeRF stands for Home Radio Frequency, which uses radio frequencies to transmit data over ranges of 22.5 to 37.5 meters. It is the ideal technology for a user that can not afford the costs of the more expensive Wi-Fi components, yet wishes to share files, print services and stream MP3 music within his/her home. HomeRF uses a type of spread spectrum technology which was initially developed by the military. This technology transmits signals using the 2.4-GHz frequency band and employs a frequency-shift key (FSK) technology known as Frequency Hopping Spread Spectrum (FHSS). Moreover, HomeRF is based on the Shared Wireless Access Protocol (SWAP) - a hybrid standard developed by IEEE 802.11. SWAP can connect up to 127 network devices and transmits at speeds up to 2 Mbps. HomeRF applies the same frequency band and technology which is used by cellular and cordless phones, yet there is little to no interference. Since most HomeRF networks are peer-to-peer networks, they do not require access points.

### PROBLEMS OF PRIOR-ART SOLUTIONS

Conventional wireless home networking technologies such as Bluetooth or HomeRF, that enable consumers to wirelessly access information from their home network via radio links at any time and anywhere, often suffer from limited bandwidths and face low data throughput and scalability limitations. These limitations become significant as the demand for multimedia home entertainment networks increases. It can be shown that a single coordinating wireless access point is often not enough to cover a typical home network, in particular within solid European houses. Existing solutions covering a whole building hence require an allocation of multiple RF channels, which are a rare resource.

Heterogeneous home networking architectures consisting of different media types (wired, wireless and powerline) are complex systems. These media types typically require different standalone media access control (MAC) layers. Bridging between these media usually takes place at a high layer of the underlying OSI protocol stack (e.g. the TCP/IP layer), which consumes more processing power and decreases the overall throughput.

### OBJECT OF THE PRESENT INVENTION

In view of the explanations mentioned above, it is the primary object of the present invention to propose a method for extending the RF coverage area of a heterogeneous networking system.

Further on, the processing power needed for bridging between different types of media interconnected via said home networking system should be decreased. The overall throughput should be increased.

This object is achieved by means of the features of the independent claims. Advantageous features are defined in the subordinate claims. Further objects and advantages of the invention are apparent in the detailed description which follows.

### SUMMARY OF THE INVENTION

The proposed approach of the present invention is basically dedicated to a method for extending the RF coverage area of a heterogeneous home networking system which is constituted by a number of wired (f.e. Ethernet) and/or wireless local area networks (WLANs) connected to a backbone that comprises a number of bridges to wired clusters and wireless-to-wired backbone bridges.

In contrast to conventional solutions according to the state of the art, the present invention combines home network media elements of different multimedia data types interconnected by said home networking system on different RF/PHY layers and enables a simple extension of the RF coverage without the need of new frequency resources or any loss of bandwidth.

### BRIEF DESCRIPTION OF THE DRAWINGS

Further advantages and conceivable applications of the present invention result from the subordinate claims as well as from the following description of one embodiment of the invention as depicted in the following drawings:
- Fig. 1a: shows an example for a heterogeneous home networking system installed within a building which is constituted by a number of wired and/or wireless LANs connected to a backbone network, the home networking system comprising a number of wired and wireless terminals interconnected via said wired backbone network,
- Fig. 1b: shows a logical network structure for the home networking system,
- Fig. 2: shows an analog frontend architecture for the modulator/demodulator stage of a wireless RF transceiver, wherein the same MAC layer is used for the overall network such that the respective IF signal of an RF signal transmitted via an allocated RF transmission channel of a wireless local area network is used on the backbone media and on said wireless local area network,
- Fig. 3: shows an analog frontend architecture of a wireless RF transceiver with a PHY-layer conversion stage, wherein the same MAC layer but different PHY layers are used on the backbone media and on said wireless local area network.

### DETAILED DESCRIPTION OF THE PRESENT INVENTION

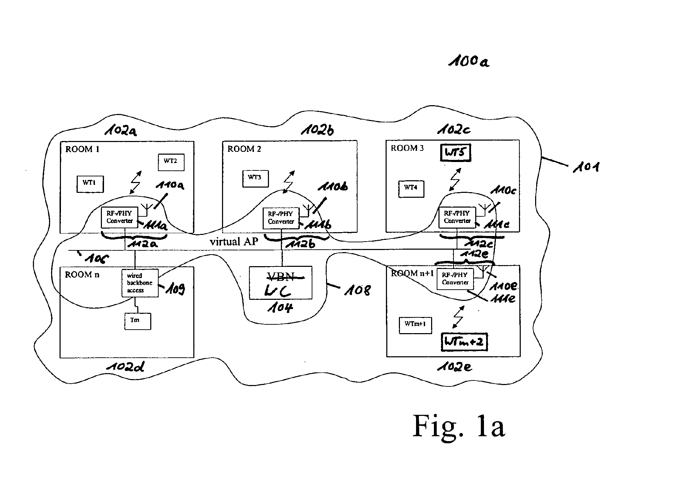

In the following, one embodiment of the present invention as depicted in Figs. 1a to 3 shall be explained in detail. The meaning of the symbols designated with reference numerals and signs in these figures can be taken from an annexed table.

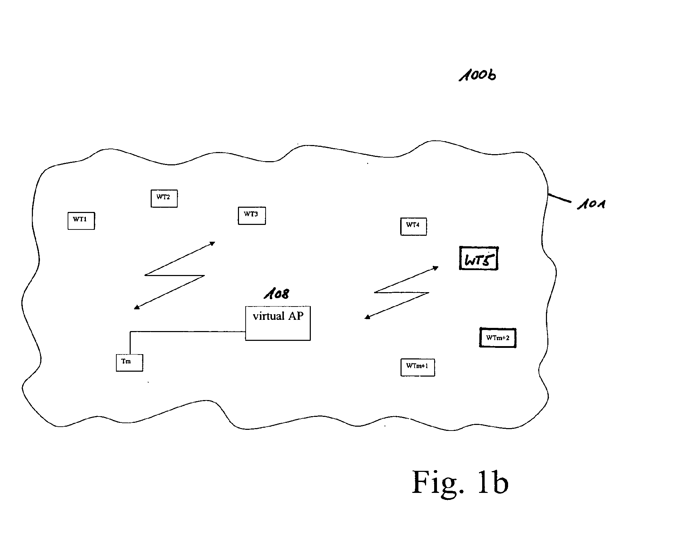

As depicted in Figs. 1a+b, a backbone network 106 having a controlling instance 104 acts as a virtual access point 108 (AP), and several RF/PHY converters 111a-e are applied to interconnect a number of distributed wireless (WT₁, WT₂, WT₃, WT₄, WT₅, WT_{*m*}₊₁, and WT_{*m*}₊₂) and/or wired terminals (T_{*m*}) via this virtual access point 108. Each of these RF/PHY converters 111a-e thereby serves a relatively small area (e.g. a single room 102a-e of a networked building). Together with the associated wired or wireless terminals the virtual AP 108 builds one overall home networking system 100a which can easily be extended by adding new RF/PHY converters to the backbone network 106.

If the backbone network 106 uses an OFDM technique, multipath reception is constructively overlaid at the receiver as long as the different signals arrive within a defined intervall (the so-called guard intervall). Therefore, the virtual access point 108 can receive and transmit at different locations (f.e. antennas in different rooms) although the transmitted signals will have different propagation lenghts on the backbone media.

Therefore each media using OFDM is preferred for the backbone network according to the present invention. Examples are:
- Powerline Communications
- 5 GHZ WLAN systems (802.11a, HiperLAN2)
- 2.4 GHZ WLAN systems (802.11g)

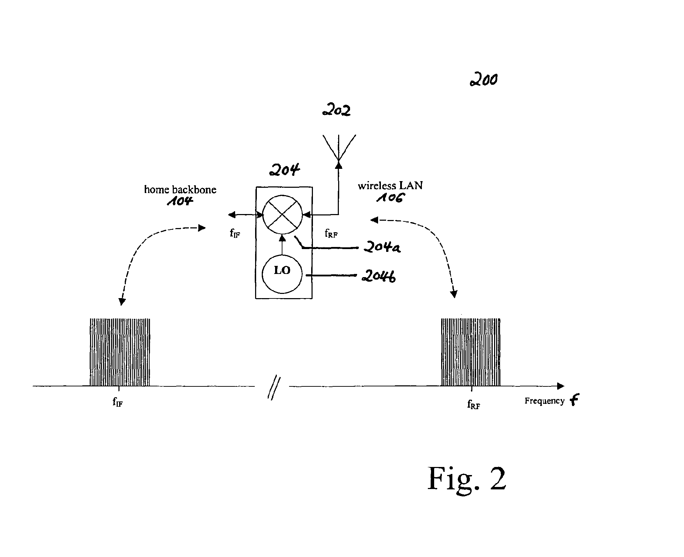

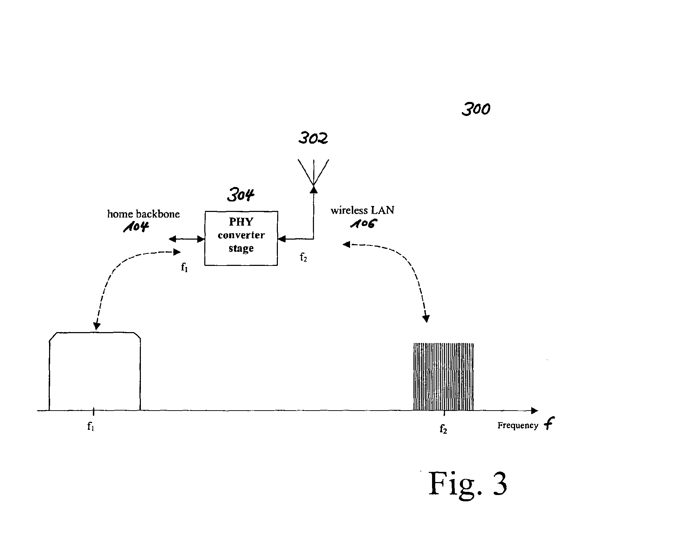

Depending on the harmonization between the backbone media and the wireless local area networks 102a,b,c,e, two scenarios for interconnecting distributed wireless terminals (WT₁, WT₂, WT₃, WT₄, WT_{*m*}₊₁, WT_{*m*+2}) and wired communication devices (T_{*m*}) to a home networking system 100a as depicted in Figs. 2 and 3 can be considered:
- If the corresponding IF signal of an RF signal to be transmitted or received via an allocated RF transmission channel of a wireless LAN 102a,b,c,e is used on the media of the backbone network 106, a conventional wireless RF transceiver with an analog frontend architecture comprising a modulator/demodulator 204 with a single up-/down-conversion stage 204a and a local oscillator 204b can be used for interconnecting said distributed wireless (WT₁, WT₂, WT₃, WT₄, WT₅, WT_{*m*}₊₁, and WT_{*m*}₊₂) and wired terminals (T_{*m*}) via the virtual access point 108 to form a home networking system 100a. This solution is e.g. applicable for home networking systems where a powerline communication system serves as home network backbone 106. In this case, the IF spectrum of an RF signal received via an allocated RF transmission channel of a wireless LAN 102a,b,c,e is used on the mains. Thereby, the same MAC layer is used for the overall network, which consists of the wireless LANs 102a,b,c,e and the backbone network 106, such that the respective IF signal of an RF signal transmitted via an said RF transmission channel is used on the backbone media and on the respective wireless LANs 102,a,b,c,e.
- In case a PHY-layer signal on said RF transmission channel can not properly be mapped to a signal on the backbone network 106, a PHY-layer bridging procedure is proposed.

In this scenario, the same MAC layer but different PHY layers are used on the backbone media and on the respective wireless local area network 102a,b,c,e. Thereby, a wireless RF transceiver comprising a PHY-layer conversion stage needed for converting the digital RF signal at the center frequency f1 into the other modulation scheme at the center frequency f2 or vice versa is introduced to guarantee best possible data transmission on both media types. The PHY-layer conversion procedure (S5) thereby comprises the steps of receiving (S5a) an RF signal from a wireless local area network 102a,b,c,e, allocating (S5b) a backbone medium, converting (S5c) the RF signal from one digital modulation to another, and transmitting (S5d) the obtained RF signal via the allocated backbone medium. By contrast, the inverse PHY-layer conversion procedure (S5') is characterized by the steps of receiving (S5a') a digital signal from a backbone, allocating (S5b') a single RF transmission channel of a wireless local area network 102a,b,c,e through a wireless PHY converting stage 112a-e, converting (S5c') the signal from one modulation scheme to the other and transmitting (S5d') the obtained RF signal via the allocated RF transmission channel.

Note that both digital modulation schemes may use bands in the RF range rather than converting to the IF range as proposed in the first embodiment.

Independent of the respective scenario, the present invention allows the usage of one common MAC layer that is controlled by a central backbone controller 104 which allows most simple integration of all possible home network media elements. Said backbone network 106 thereby appears to the outside world as a single all-controlling instance. Other media types can be connected to the backbone network 106 by using a special device with a protocol stack having an appropriate convergence layer on top, which acts as a terminal within the backbone network 106.

**Table:**

| **Depicted Features and their Corresponding Reference Signs** | |
|---|---|
| No. | Technical Feature (System Component or Procedure Step) |
| 100a | home networking system which is constituted by a number of wired (102d) and wireless LANs (102a,b,c,e) connected to a backnone network 106, said home networking system 100a comprising a number of wireless terminals WT₁, WT₂, WT₃, WT₄, WT₅, WT_{*m*}₊₁, WT_{*m*}₊₂ and one wired communication device T_{*m*} interconnected via a virtual access point (AP) |
| 100b | logical network structure for the home networking system 100a |
| 101 | coverage area of a home network environment with interconnected wireless (WT₁, WT₂, WT₃, WT₄, WT₅, WT_{*m*}₊₁, and WT_{*m*}₊₂) and wired communication devices (T_{*m*}) |
| 102a | room #1 of a networked building in the coverage area of a wireless home networking system 100a, wherein two wireless terminals (WT₁ and WT₂) are connected to a backbone network 106 via a first RF/PHY converter stage 111a |
| 102b | room #2 of the networked building in the coverage area 101 of the wireless home networking system 100a, wherein one wireless terminal (WT₃) is connected to the backbone network 106 via a second RF/PHY converter stage 111b |
| 102c | room #3 of the networked building in the coverage area of the wireless home net-working system 100a, wherein two wireless terminals (WT₄ and WT₅) are connected to the backbone network 106 via a third RF/PHY converter stage 111c |
| 102d | room #*n* of the networked building in the coverage area of the wireless home net-working system 100a, wherein one wired communication device T_{*m*} is connected to the backbone network LAN 106 via a wired backbone access node 109 |
| 102e | room #(*n*+1) of the networked building in the coverage area of the wireless home net-working system 100a, wherein two wireless terminals WT_{*m*}₊₁ and WT_{*m*}₊₂ are connected to the backbone network 106 via a fourth RF/PHY converter stage 111e |
| 104 | controlling instance of the network system, connected to the backbone network 106 |
| 106 | backbone network interconnecting a number of wireless (111a-e) and/or wired backbone access nodes (109) of the home networking system 100a |
| 108 | virtual access point, consisting of the backbone network 106 and a number of interconnected wireless (111a-e) and/or wired backbone access nodes (109) |
| 109 | wired backbone access node, which connects the wired communication device T_{*m*} located in room #*n* to the backbone network 106 |
| 110a | Tx/Rx antenna of a first wireless RF transceiver 112a |
| 110b | Tx/Rx antenna of a second wireless RF transceiver 112b |
| 110c | Tx/Rx antenna of a third wireless RF transceiver 112c |
| 110e | Tx/Rx antenna of a fourth wireless RF transceiver 112e |
| 111a | RF/PHY converter stage of the first wireless RF transceiver 112a, which connects the wireless terminals WT₁ and WT₂ located in room #1 to the backbone network106 |
| 111b | RF/PHY converter stage of the second wireless RF transceiver 112b, which connects the wireless terminal WT₃ located in room #2 to the backbone network 106 |
| 111c | RF/PHY converter stage of the third wireless RF transceiver 112c, which connects the wireless terminals WT₄ and WT₅ located in room #3 to the backbone network 106 |
| 111e | RF/PHY converter stage of the fourth wireless RF transceiver 112e, which connects the wireless terminals WT_{*m*}₊₁ and WT_{*m*}₊₂ located in room #(*n*+1) to the backbone network 06 |
| 112a | first wireless RF transceiver 112a, located in room #1 of the networked building |
| 112b | second wireless RF transceiver 112b, located in room #2 of the networked building |
| 112c | third wireless RF transceiver 112c, located in room #3 of the networked building |
| 112d | fourth wireless RF transceiver 112d, located in room #(*n*+1) of the networked building |
| 200 | analog front end architecture for the combined modulator/demodulator stage of a wireless RF transceiver needed for a down-conversion of an RF signal received via an allocated RF transmission channel of a wireless local area network 102a,b,c,e from an RF band to an intermediate frequency (IF) band or an up-conversion of an IF signal to be transmitted from the IF band to an RF band, wherein the same MAC layer is used for the overall network such that the respective IF signal of an RF signal transmitted via an allocated RF transmission channel of a wireless local area network 102a,b,c,e is used on the backbone media and on the wired backbone network 106 |
| 202 | Tx/Rx antenna of the wireless RF transceiver |
| 204 | modulator/demodulator stage of the wireless RF transceiver |
| 204a | up-/down-conversion mixer of the modulator/demodulator stage 204 |
| 204b | local oscillator of the modulator/demodulator stage, which provides an approximately sinusoidal oscillator signal |
| 300 | analog frontend architecture of a wireless RF transceiver with a PHY-layer conversion stage needed for a PHY-layer conversion of an RF signal received via an allocated RF transmission channel of a wireless local area network 102a,b,c,e from an RF band at a center frequency *f*₂ to another center frequency *f*₁ or vice-versa, wherein the same MAC layer but different PHY layers are used on the backbone media and on the wireless local area networks 102a,b,c,e |
| 302 | Tx/Rx antenna of the wireless RF transceiver |
| 304 | PHY-layer conversion stage of the wireless RF transceiver |
| µC | central backbone controlling instance (µC) of the backbone network 106, which controls the common media access control (MAC) layer |
| S0a | step #0a: allocating a number of wired and/or wireless transmission channels |
| S0b | step #S0b: bridging between home network media elements of different multimedia data types on allocated transmission channels at a predefined layer of the underlying protocol stack |
| S1 | step #1: using a common media access control (MAC) layer for the entire home net-working system 100a needed for accessing different backbone media of the wired backbone network 106 |
| S2 | step #2: accessing backbone media of the backbone network 106 |
| S2' | step #2': integrating home network media elements of different multimedia data types interconnected by said home networking system 100a |
| S3 | step #3: using different physical (PHY) layers on the backbone media and on the wireless local area networks 102a,b,c,e |
| S4 | step #4: mapping the PHY-layer representation of an RF signal transmitted via an allocated RF transmission channel of a wireless local area network 102a,b,c,e to an IF signal on a backbone medium of the wired backbone network 106 |
| S5 | step #5: PHY-layer conversion procedure |
| S5' | step #5': inverse PHY-layer conversion procedure |
| S5a | step #5a: receiving an RF signal from a wireless local area network 102a,b,c,e |
| S5b | step #5b: allocating a backbone medium connected to the backbone network 106 |
| S5c | step #5c: down-converting the RF signal from an RF band to a corresponding IF band |
| S5d | step #5d: transmitting the obtained IF signal via the allocated backbone medium |
| S5a' | step #5a': receiving an IF signal from a backbone medium connected to the backbone network 106 |
| S5b' | step #5b': allocating a single RF transmission channel of a wireless local area network 102a,b,c,e connected to the wired Ethernet LAN 106 via a wireless access point 112a-e |
| S5c' | step #5c': up-converting the IF signal from the IF band to a corresponding RF band |
| S5d' | step #5d': transmitting the obtained RF signal via the allocated RF transmission channel |

## Claims

1. A method for operating a heterogeneous networking system (100a) which is constituted by wired (102d) and/or wireless LANs (102a,b,c,e) connected to a virtual access point (108) which comprises a backbone network (106), a controlling instance (104), wired-to-backbone bridges (109) and wireless-to-backbone bridges (112a-e) to the backbone network (106),
said method comprising the steps of
- bridging (S0b) between network media elements of different multimedia data types on transmission channels at a predefined layer of the underlying protocol stack,
**characterized by** the steps of
- using (S1) a common media access control (MAC) layer for the heterogeneous networking system (100a) needed for accessing (S2) different media of backbone network (106) and integrating (S2') network media elements of different multimedia data types interconnected by said networking system (100a), and
- using (S3) different physical (PHY) layers on the backbone media and on the wireless LANs (102a,b,c,e).

2. A method according to claim 1,
**characterized by**
a PHY-layer conversion procedure (S5) comprising the steps of
- receiving (S5a) an RF signal from a wireless LAN (102a,b,c,e),
- allocating (S5b) a backbone medium connected to the backbone network (106),
- down-converting (S5c) the RF signal from an RF band to a corresponding IF band, and
- transmitting (S5d) the obtained IF signal via the allocated backbone medium.

3. A method according to claim 1 or 2,
**characterized by**
an inverse PHY-layer conversion procedure (S5') comprising the steps of
- receiving (S5a') a digital signal from a backbone,
- allocating (S5b') a single RF transmission channel of a wireless LAN (102a,b,c,e) connected to the wired backbone network(106) through a wireless-to-backbone bridge (112a-e),
- converting (S5c') the signal from the physical layer on the backbone media to a corresponding modulated signal in the RF band, and
- transmitting (S5d') the obtained RF signal via the allocated RF transmission channel.

4. A method according to anyone of the claims 1 to 3,
**characterized in that**
the common media access control (MAC) layer is controlled by a central backbone controlling instance (104) of the wired backbone network (106).

5. A method according to anyone of the preceding claims,
wherein the backbone network (106) uses an OFDM transmission technique.

6. A heterogeneous networking system constituted by wired (102d) and/or wireless LANs (102a,b,c,e) which are connected to a virtual access point (108) of a backbone network (106) comprising wired-to-backbone bridges (109) and wireless-to-backbone bridges (112a,b,c,e),
**characterized in that**
said networking system (100a) has a single media access control (MAC) layer for accessing (S2) different media of the backbone network (106) and integrating (S2') a number of network media elements of different multimedia data types interconnected by said home networking system (100a).

7. A heterogeneous home networking system according to claim 6,
**characterized in that**
each wireless-to-backbone bridge (112a,b,c,e) comprises a PHY-layer conversion stage (304) for mapping the PHY-layer representation of an RF signal transmitted via a wireless local area network (102a,b,c,e) to a signal on a backbone medium.

8. A heterogeneous home networking system according to anyone of the claims 6 or 7,
**characterized in that**
the backbone network (106) and its controlling instance (104) is a powerline communication system which is designed to use the IF spectrum of an RF signal received via an allocated RF transmission channel of a wireless local area network (102a,b,c,e).

9. Use of a single MAC layer throughout a heterogeneous networking system constituted by wired (102d) and/or wireless LANs (102a,b,c,e) which are connected to a virtual access point (108) of a backbone medium (106) comprising wired-to-backbone-bridges (109) and wireless-to-wired bridges (112a,b,c,e).
